# EUROPÄISCHE PATENTANMELDUNG

(11) **EP 4 826 809 A2**
(43) Veröffentlichungstag der Anmeldung: **21.10.2026**
(21) Anmeldenummer: 26158547.5
(22) Anmeldetag: 13.02.2026
(51) Int. Cl.: H01M 8/04029, H01M 8/04007

(54) **SYSTEM ZUR KÜHLUNG EINES BRENNSTOFFZELLENSTACKS SOWIE VERFAHREN ZUR KÜHLUNG EINES BRENNSTOFFZELLENSTACKS**

(30) Priorität: 14.04.2025 DE 102025114572; 04.06.2025 DE 102025121853
(71) Anmelder: Deutsches Zentrum für Luft- und Raumfahrt e.V., 53227 Bonn (DE)
(72) Erfinder: Gebhart, Raphael, 82205 Gilching (DE); van der Linden, Franciscus, 82008 Unterhaching (DE); Pillath, Florian, 22763 Hamburg (DE); Becker, Florian, 22309 Hamburg (DE)
(74) Vertreter: VKK Patentanwälte PartG mbB

(57) **Zusammenfassung**

Die Erfindung betrifft ein System zur Kühlung eines Brennstoffzellenstacks, aufweisend ein erstes Brennstoffzellenkühlsystem, in welchem ein erstes Kühlmediums in Kühlkanälen gefördert wird und welches einen ersten Wärmeübertrager aufweist, welcher zur Abgabe einer ersten Wärme des ersten Kühlmediums an eine Umgebung eingerichtet ist, weiter aufweisend ein weiteres Kühlsystem, wobei das weitere Kühlsystem ein Wasserbehälter zur Aufnahme flüssigen Kühlwassers und einen weiteren Wärmeübertrager aufweist, wobei der weitere Wärmeübertrager in einer ersten Förderrichtung des ersten Kühlmediums angeordnet ist, dadurch gekennzeichnet, dass der weitere Wärmeübertrager zur Übertragung einer weiteren Wärme des ersten Kühlmediums an das Kühlwasser eingerichtet ist, wobei das weitere Kühlsystem Wasserverdampfungsmittel aufweist, durch die das Kühlwasser zumindest teilweise verdampfend ist und das verdampfte Wasser an die Umgebung abgegeben wird.

Die Erfindung betrifft weiterhin ein Verfahren zur Kühlung eines Brennstoffzellenstacks.

## Beschreibung

Die vorliegende Erfindung betrifft ein System zur Kühlung eines Brennstoffzellenstacks sowie gleichermaßen ein Verfahren zur Kühlung eines Brennstoffzellenstacks.

Die Brennstoffzellentechnologie bietet eine Lösung für die effiziente und klimafreundliche Energiewandlung von in Wasserstoff chemisch gebundener Energie zu elektrischer und thermischer Energie. Brennstoffzellenstacks bestehen allgemein aus mehreren gestapelten Zelleneinheiten, die mit einem galvanischen Element vergleichbar sind. Sie leisten elektrische Arbeit, die für verschiedene Anwendungen, wie zum Beispiel in der Mobilität oder in stationären Systemen zur Energieversorgung, genutzt werden kann. Elektrische Energie, wie aus erneuerbaren und klimaneutralen Energiequellen, kann in Form von Wasserstoff gespeichert werden. Wird dieser Wasserstoff von einem Brennstoffzellenstack in elektrische Energie umgewandelt, erfolgt dies frei von Kohlendioxid-Emissionen und könnte somit Schwerlastvehikel in der globalen Mobilität mit elektrischen Antrieben, wie Schiffe oder Flugzeuge, dekarboniseren. Dabei wird Wasserstoff als Brennstoff durch den Oxidator, beispielsweise Luftsauerstoff, oxidiert und Wasser in flüssiger sowie gasförmiger Phase emittiert. Das Verhältnis von elektrischer Arbeit zu Abwärme liegt bei Brennstoffzellen üblicherweise bei 1:1. Damit verhält sich die Abwärmemenge in der Größenordnung der elektrischen Arbeit des jeweiligen zu betreibenden Brennstoffzellenstacks.

In Polymerelektrolytmembran- (PEM) Brennstoffzellen wird flüssiges Wasser für den Protonen-Transport in der Membran benötigt. Dadurch muss die Brennstoffzellentemperatur abhängig vom Betriebsdruck unter der Sättigungsdampftemperatur von Wasser liegen. Bei atmosphärischem Druck, beispielsweise unter 100°C. Stand der Technik von PEM-Brennstoffzellenstacks sind Betriebstemperaturen von 80°C.

Bei Brennstoffzellenstacks in einer Leistungklasse von bis zu 5 kW kann die Abwärme durch eine im Stack integrierte Luftkühlung mit frischer Zuluft an die Umgebung abgeführt werden (Air Cooling). Bei höheren Leistungsbedarfen ist diese Methode nicht sinnvoll, da die zu übertragende Wärmemenge durch die Stack- und Zellkonstruktion (Dimensionen der Luftkühlkanäle) limitiert sind. Der Stand der Technik stellt verschiedene Konzepte zur Auswahl, nach denen die Abwärme der Brennstoffzelle abgeführt werden kann, indem zusätzlich Wasser in die Anodenseite (Brennstoff) oder Kathodenseite (Oxidator) der Brennstoffzelle eingebracht wird, dort verdampft und mit den Reaktionsprodukten abgeführt wird (Verdunstungskühlung). Das Wasser muss dabei deionisiert vorliegen, um eine Degradation der Brennstoffzelle sowie den elektrischen Kurzschluss der Zellen zu vermeiden. Andererseits darf das zusätzliche Wasser nicht zu einem Fluten der Gas-Diffusions-Schichten führen, da dadurch die Reaktion behindert werden würde, indem der Sauerstoff daran gehindert wird, zur Reaktionszone zu gelangen. Aufgrund der erwähnten Probleme bei der Verdunstungskühlung innerhalb der Anode und Kathode einer Brennstoffzelle werden generell separate Kühlkanäle innerhalb der Brennstoffzellen eingesetzt, die ein Kühlmedium zur Aufnahme der Abwärme über der Reaktionsfläche der Zelle führen. D.h., ein Kühlmedium wird durch die Abwärme der Reaktion innerhalb der Brennstoffzelle erhitzt und / oder verdampft (Flüssigkühlung oder Phasenwechselkühlung, englisch "Liquid Cooling" oder "Phase Change Cooling"), damit das Thermalmanagement der Brennstoffzelle bzw. des Brennstoffzellenstacks die maximale Betriebstemperatur einhalten kann. Beim Liquid Cooling oder Phase Change Cooling handelt es sich um geschlossene Kühlkreisläufe, da das Kühlmedium meist nicht in die Umwelt abgeführt werden darf, und falls doch (z.B. im Fall von Wasser), erhöhten Anforderungen (z.B. deionisiert) unterliegt und es deshalb nicht wirtschaftlich wäre, das Kühlmedium laufend zu ersetzen. Im geschlossenen Kühlkreislauf kann somit die durch das Kühlmedium aufgenommene Wärme nicht mit dem Kühlmedium selbst an die Umgebung abgegeben werden. Sie muss daher an einer anderen Stelle im Kühlkreislauf wieder abgegeben werden, um ein Überhitzen von Kühlmedium und damit Brennstoffzelle, was zu dessen Degradation führen würde, zu vermeiden.

In stationären Anwendungen wie Kraftwerken stehen verschiedene Verfahren zur Verfügung, um Abwärme an die Umgebung abzuführen - etwa über Kühltürme (trocken, nass oder hybrid, mit freier oder erzwungener Strömung) oder über fließendes Wasser. In mobilen Anwendungen wie Fahrzeugen, insbesondere in der Luftfahrt, wird die Abwärme nahezu ausschließlich über Kühler durch erzwungene Konvektion an die Umgebungsluft abgeführt. Die erforderliche Luftströmung entsteht entweder durch die Bewegung des Fahrzeugs oder - insbesondere im Stillstand - durch den Einsatz eines Gebläses.

In den bekannten Luftkühlsystemen für Flugzeuge müssten wegen der erheblichen Abwärme von Brennstoffzellenstacks große und schwere Kühlsysteme eingesetzt werden, die zudem einen deutlichen Luftwiderstand zur Folge haben. Die insbesondere in der Startphase des Flugzeuges aufzubringende Leistung des Gebläses zur Beschleunigung der Kühlluft ist zudem enorm. Dies hätte zur Konsequenz das die notwendige Antriebsleistung zusätzlich steigen würde. Damit kann die Gesamtleistung des Flugzeugs nicht optimal genutzt werden. Dies gilt insbesondere während des Starts, wo eine größere Leistung und damit auch eine erhöhte Kühlung erforderlich ist. Außerdem herrschen beim Start üblicherweise gegenüber dem Reiseflug deutlich höhere Temperaturen und eine deutlich geringere Anströmgeschwindigkeit der zur Kühlung genutzten Umgebungsluft, was die Kühlung deutlich erschwert.

Bei bekannten konventionellen Flugzeugen, insbesondere solchen, die Kerosin als Treibstoff verwenden, ist es bekannt, den ohnehin vorhandenen Treibstoff und dessen große thermische Masse als Wärmesenke an verschiedenen Stellen des Antriebskreislaufs zur Kühlung zu nutzen. Brennstoffzellenbetriebene Flugzeugantriebe nutzen als Treibstoff den gasförmigen oder kryogenen Wasserstoff. Zwar kann die Kühlkapazität von kryogenen Wasserstoff vor Eintritt in die Brennstoffzelle anteilig genutzt werden, da nach aktuellem Stand der Technik die Temperatur zwischen 5 und 70 °C für den zugeführten Wasserstoff herstellerseitig gefordert sind. Allerdings ist eine vermehrte Treibstoffkühlung wie bei Kerosin durch Zirkulation des Treibstoffs bei Wasserstoff, welcher flüssig oder unter hohem Druck in Drucktanks gelagert ist, nicht realisierbar. Daher sind an ein Kühlsystem eines Brennstoffzellenantriebs, insbesondere in einem Flugzeug, besondere Anforderungen gestellt, die Kühlleistung durch Treibstoffzirkulation zu kompensieren. Ein Ersatz allein durch Luftkühlung ist kaum rentabel, aufgrund des dazu notwendigen Luftstromes, der besonders beim Start, aufgrund der niedrigen relativen Geschwindigkeit der Umgebungsluft, allein durch eine Gebläse erzeugt werden müsste. Dies würde eine Gebläseleistung in der Größenordnung der durch die Brennstoffzelle erzeugten Leistung erfordern und, wie erwähnt, die mitzuführende Masse und den Luftwiderstand erhöhen.

Es ist daher Aufgabe der Erfindung, ein System zur verbesserten Kühlung eines Brennstoffzellenstacks vorzuschlagen, welches insbesondere für den mobilen Einsatz, bevorzugt in einem Flugzeug, geeignet ist. Weiterhin ist es Aufgabe der Erfindung, ein entsprechendes Verfahren für den Betrieb eines Brennstoffzellenstacks anzugeben.

Die erste Aufgabe wird erfindungsgemäß gelöst durch ein System zur Kühlung eines Brennstoffzellenstacks gemäß den Merkmalen nach Anspruch 1.

Dabei weist das System ein erstes Brennstoffzellenkühlsystem, in welchem ein erstes Kühlmediums in Kühlkanälen gefördert wird, auf. Dieses erste Brennstoffzellenkühlsystem entspricht einem aus dem Stand der Technik bekannten Kühlsystem für Brennstoffzellen. Das erste Kühlmedium nimmt dabei durch thermischen Kontakt mit dem Brennstoffzellenstack dessen im Betrieb entstehende Abwärme auf. Genutzt wird dabei insbesondere die Flüssigkühlung, welche eine Kühlung durch Temperaturerhöhung des ersten Kühlmediums ermöglicht, als auch die Phasenwechselkühlung (*phase change cooling*)*,* bei der eine Kühlung auf Verdampfung des ersten Kühlmediums basiert. In Abhängigkeit des verwendeten Kühlverfahrens sind erste Kühlmedien geeignet zu wählen. Gefördert wird das erste Kühlmedium im ersten bevorzugt mit Hilfe mindestens einer Pumpe. Eine erste Wärme des ersten Kühlmediums wird in einem ersten Wärmeübertrager an einen Umgebungsluftstrom abgegeben. Dabei kann es sich bei einem ersten Wärmeübertrager auch um eine Mehrzahl in Serie oder parallel angeordneter Wärmeübertrager handeln. Der Umgebungsluftstrom wird je nach relativer Bewegung der Umgebungsluft generiert. Im ausreichend schnell bewegten Gesamtsystem, wie z.B. einem Flugzeug im Reiseflug, ist mitunter die relative Bewegung der Umgebungsluft und der entsprechende Massefluss ausreichend, die erste Wärme abzuführen. Im Stillstand oder bei langsamer Bewegung des Gesamtsystems, z.B. in einer Startphase eines Flugzeuges, wird der Umgebungsluftstrom bevorzugt mit Hilfe eines Gebläses erzeugt. Bei bekannter Verwendung lediglich des ersten Brennstoffzellenkühlkreislaufs ist die gesamte durch das erste Kühlmedium im Brennstoffzellenstack aufgenommenen Abwärme durch den Umgebungsluftstrom abzuführen, die aufgenommene Abwärme entspricht in diesem Fall der abzugebenden ersten Wärme. Erfindungsgemäß ist ein weiteres Kühlsystem vorgesehen, in welchem Kühlwasser gefördert ist und welches zur Aufnahme einer weiteren Wärme des ersten Kühlmediums ausgelegt ist. Dabei ist ein Wärmeübergang zwischen erstem Kühlmedium und Kühlwasser vorgesehen, insbesondere realisiert durch einen weiteren Wärmeübertrager. Dieser ist in einer Förderrichtung des ersten Kühlmediums nach Aufnahme der Abwärme des Brennstoffzellenstacks und vor, während oder nach der Übertragung der ersten Wärme erzeugt. Dadurch wird dem ersten Kühlmedium bevorzugt zunächst eine weitere Wärme entzogen, bevor die erste Wärme an die Umgebung abgeführt wird. Mit großem Vorteil ist die an die Umgebungsluft abzugebende erste Wärme bei allen genannten relativen Anordnungen des weiteren Wärmeübertragers um den Betrag der weiteren Wärme reduziert, wodurch die Belastung des ersten Wärmeübertragers reduziert wird.

Das weitere Kühlsystem weist dabei einen Wasserbehälter, insbesondere einen Wassertank, zur Aufnahme des flüssigen Kühlwassers auf.

Erfindungsgemäß weist das weitere Kühlsystem zudem Wasserverdampfungsmittel auf, durch deren Betrieb Kühlwasser, welches die weitere Wärme aufgenommen hat, im weiteren Kühlsystem teilweise oder vollständig verdampfend ist. Dadurch wird eine der Verdampfungsenthalpie des Kühlwassers entsprechende Wärme im weiteren Kühlsystem abgegeben, was eine effektive Kühlung ermöglicht. Der Wasserbehälter kann auf Umgebungsdruck gehalten werden oder mit technischen Mitteln druckreguliert betrieben werden.

Der Brennstoffzellenkühlkreislauf des ersten Brennstoffzellenkühlsystems, der im direkten thermischen Kontakt mit dem Brennstoffzellenstack steht, bleibt beim erfindungsgemäßen System bestehen. Damit steht das Kühlwasser des weiteren Kühlsystems jedenfalls nicht im direkten Kontakt mit dem Brennstoffzellenstack, was die Anforderungen hinsichtlich Reinheit und sonst notwendiger Deionisierung des Kühlwassers abschwächt. Zudem kann das erste Brennstoffzellenkühlsystem wie in bisher bekannten Anwendungen verwendet werden und entsprechende Aufgaben und Funktionen, wie Kühlung des Brennstoffzellenstacks, Frostschutz der Zellen des Brennstoffzellenstacks, Regelung und Steuerung der Betriebstemperatur des Brennstoffzellenstacks übernehmen. Das erfindungsgemäße weitere Kühlsystem stellt dabei einen zusätzlichen Kühlkreislauf da, der robust und zuverlässig ist. Dieses zusätzliche Kühlsystem bietet eine mögliche Redundanz zum ersten Brennstoffzellenkühlsystem, die die betriebliche Sicherheit und Zuverlässigkeit verbessern kann. Bei einem Ausfall oder einer Überlastung des ersten Brennstoffzellenkühlsystems kann das insbesondere als Notfallsystem ausgebildete weitere Kühlsystem entweder automatisch oder manuell aktivierbar sein, um die Kühlung des Brennstoffzellenstacks zu sichern und möglichen Schäden durch Überhitzung entgegenzuwirken. Das Notfallsystem kann dazu dienen, bei außergewöhnlichen Betriebsbedingungen zügig und effektiv zu agieren und den Brennstoffzellenstack innerhalb sicherer Betriebstemperaturen zu halten. Es kann eigenständig funktionieren oder in ein bestehendes Kühlsystem integrierbar sein, um bei Bedarf zusätzliche Kühlkapazitäten bereitzustellen. Das weitere Kühlsystem kann weiterhin insbesondere für einen partiellen Betrieb vorgesehen sein und in Situationen betrieben werden, in denen zusätzliche Kühlkapazität benötigt wird, beispielsweise bei hoher Leistung des Brennstoffzellenstacks (Start, Steigflug) oder, wenn die Wärmeabgabe des ersten Kühlsystems an die Umgebung durch hohe Umgebungstemperaturen erschwert wird. Zudem kann er in Notfällen genutzt werden, um in kurzer Zeit eine hohe Kühlkapazität bereitzustellen.

Da der Sättigungsdampfdruck des erfindungsgemäß zu verdampfenden Kühlwassers mit der Temperatur steigt, ist ein Betrieb des Brennstoffzellenstacks bei hohen Temperaturen bevorzugt, insbesondere über 100°C wie z.B. bei 130 °C. Dadurch ist keine Druckverminderung beispielsweise durch Betrieb eines Kompressors notwendig, um ausreichend Wasser durch den Eintrag der weiteren Wärme verdampfen zu können. In diesem hohen Temperaturbereich ist ein Verdampfen des Wassers bei atmosphärischem Druck möglich. Eine erhöhte Temperatur des Brennstoffzellenstacks ist z.B. durch einen erhöhten Betriebsdruck erreichbar.

Da ein bei Nutzung von Sauerstoff aus Umgebungsluft für den Betrieb des Brennstoffzellenstacks notwendiger Kompressor für ein großes Druckverhältnis von Druck der Umgebungsluft zu verdichteter, dem Brennstoffzellenstack zuzuführender Luft ausgelegt ist (beispielsweise 1,2 bar zu 0,3 bar entspricht einer Verdichtung um das Vierfache), kann der gleiche Kompressor auch am Boden Verwendung finden, um den Brennstoffzellenstack bei erhöhtem Druck zu betreiben.

In Weiterbildung der Erfindung ist es vorgesehen, dass, insbesondere bei Nutzung von Niedertemperaturbrennstoffzellen, der Brennstoffzellenstack über eine geschlossene Sauerstoffquelle mit Sauerstoff für den Betrieb versorgbar ist, insbesondere wobei der derart zugeführte Sauerstoff zusammen mit einem Kathodenabgas des Brennstoffzellenstacks rezirkuliert wird.

Ein derart betriebener Brennstoffzellenstack verwendet reinen Sauerstoff aus der Sauerstoffquelle, welche vergleichbar mit einem Sauerstoffdrucktank ist, für den Betrieb. Dadurch wird der notwendige Kompressor im Betrieb mit Luftsauerstoff bei Umgebungsdrücken entlastet und bietet den Vorteil zur Steigerung der Systemeffizienz. Zudem sinkt der Molanteil des Stickstoffs, wenn der Molanteil des Sauerstoffs steigt. Dadurch verbessert sich die Performance der Brennstoffzelle, da der Stickstoff der Reaktion hinderlich ist und höhere Betriebstemperaturen beispielsweise 110°C, sind möglich.

In Ausgestaltung der Erfindung ist vorgesehen, dass der Wasserbehälter einen Einlass zum Einfüllen von flüssigem Kühlwasser und/oder einen Auslass zum Ablassen von flüssigem Kühlwasser aufweist.

Derart ist Kühlwasser im Speicher nachfüllbar insbesondere während eines Betriebs des Brennstoffzellenstacks. Der Auslass ist bevorzugt manuell oder automatisch öffnend und schließend und bevorzugt an einem tiefsten Punkt des Wasserbehälters angeordnet, sodass ein Auslassen des Kühlwassers schwerkraftgetrieben ermöglicht ist. Prinzipiell kann der Druck des Wasserbehälters gleich dem Umgebungsdruck sein oder der Druck kann über Umgebungsdruck oder unter Umgebungsdruck gehalten werden

In Weiterbildung der Erfindung ist weiterhin vorgesehen, dass der weitere Kühlkreislauf Wasserabscheidemittel zur Abscheidung flüssigen Wassers aus dem verdampften Kühlwasser aufweist und/oder dass das System weitere Wasserabscheidemittel zur Abscheidung flüssigem Wassers aus Produktwasser aus dem Betrieb des Brennstoffzellenstacks aufweist, insbesondere wobei die Wasserabscheidemittel und/oder die weiteren Wasserabscheidemittel mit dem Speicher flüssigkeitsleitend verbunden sind.

Durch das Vorsehen der Wasserabscheidemittel bzw. der weiteren Wasserabscheidemittel und deren Verbindung, insbesondere durch Leitungen, zum Wasserbehälter wird eine zumindest anteilige Rezirkulation des Kühlwassers ermöglicht, womit die Menge an anfänglich im Wasserbehälter mitzuführendem bzw. in diesem nachzufüllenden Wasser reduziert wird. Das Produktwasser entspricht dabei dem bei der Oxidation von Wasserstoff im Betrieb des Brennstoffzellenstacks entstehenden Wasser. Derart kann insbesondere eine vollständige Leerung des Wasserbehälters verhindert werden und es steht auch nach Einsatz des weiteren Kühlsystems während eines kühlintensiven Betriebs des Brennstoffzellenstacks, beispielsweise in der Startphase eines Flugzeuges, weiterhin Kühlwasser für den Betrieb des Kühlsystems, insbesondere für Notfälle zur Verfügung. Durch die Rekuperation von Produktwasser kann Kühlwasser gewonnen werden, sodass dieses im weiteren Kühlsystem erneut genutzt werden kann. Durch Wasserabscheider können Spritzwasserverluste verringert werden, indem verhindert wird das flüssigem Wasser aus dem System austritt ohne zuvor durch Verdampfen zur Kühlung beigetragen zu haben. Dadurch steigt die Kühlkapazität, indem weniger flüssiges Wasser das System verlässt.

Das erfindungsgemäße System weist in einer Ausgestaltung eine Abgasableitung zum Ableiten von insbesondere Kathodenabgas aus dem Brennstoffzellenstack auf, wobei die Abgasableitung die weiteren Wasserentfernungsmittel zum Ableiten flüssigen Wassers aus dem Kathodenabgas in den Wasserbehälter aufweist. Die Abgasableitung dient erfindungsgemäß zur Ableitung von Abgasen aus dem Stack. Auf diese Weise können die während des Betriebs entstehenden Abgasströme sicher und kontrolliert aus dem Brennstoffzellenstack geleitet werden, welche Produktwasser enthalten, welches im Allgemein in gasförmiger Form im Betrieb des Brennstoffzellenstacks durch die Oxidation von Wasserstoff entsteht. Durch Rekuperieren von flüssigem Wasser aus Produktwasser des Brennstoffzellenstacks ist eine ständige Quelle zur Befüllung des Speichers vorhanden. Dabei ist mitunter kein zusätzlicher energetischer Aufwand zur Wasserabscheidung notwendig, womit lediglich Wasserfallen in Leitungen, in denen das aus dem Brennstoffzellenstack abgeführte Produktwasser geführt wird, vorzusehen sind. Es ist möglich, dass eine Druck- oder Temperaturänderung zur Wasserabscheidung unterbleibt, da das aus dem Brennstoffzellenstack abgeführte Abgas aufgrund des endlichen Sättigungsdampfdrucks des enthaltenen Wassers trotz des grundsätzlich in gasförmiger Form entstehenden Produktwassers ohnehin Wasser in flüssiger Form enthält. Vorteilhaft ist eine Wasserabscheidung außerdem in einer anderen Ausführung jeweils bei möglichst niedrigen Temperaturen und möglichst hohen Drücken, weshalb das Vorsehen eines Kondensators in einer Abwasserableitung aus dem Brennstoffzellenstack zur Erhöhung der abscheidbaren flüssigen Wassermenge trotz des dazu notwendigen Kühlbedarf des Kondensators vorteilhaft sein kann.

Der hohe Betriebsdruck des Brennstoffzellenstacks begründet einen hohen Druck der Abluft und des rekuperierten Wassers. Dieser begründet einen Fluss in Richtung des Speichers. Sollte der Speicher allerdings unter erhöhtem Druck betrieben werden, bzw. in den entsprechenden Leitungen hohe Druckverluste auftreten, kann zur Förderung des rekuperierten Wassers eine zusätzliche Förderpumpe vorgesehen sein.

Dabei kann das aus dem Brennstoffzellenstack austretende Abgas neben der Abscheidung und dem Rekuperieren von Produktwasser beispielsweise zum Antrieb einer Turbine genutzt werden, in der ein Druckunterschied zwischen Brennstoffzellenstack und Umgebung, insbesondere bei niedrigem Umgebungsdruck im Reiseflug, für den Antrieb der Turbine genutzt wird. Dadurch ist durch einen eventuellen Kompressor zuvor an der Zuluft oder am Abgas geleistete Arbeit mindestens anteilig zurückgewinnbar. Dabei ist es besonders vorteilhaft, wenn die Temperatur des Abgases vor Eintritt in die Turbine erhöht wird, um durch die derart verringerte relative Feuchte des Abgases das Auftreten von Wasserkondensation in der Turbine zu reduzieren. Eine Erhöhung der Temperatur des gekühlten Abgases kann beispielsweise durch thermischen Kontakt mit heißer Ladeluft erfolgen, wodurch eine Ladeluftkühlung reduzierbar ist. Bevorzugt ist ein weiteres Wasserabscheidemittel bzw. eine Mehrzahl weiterer Wasserabscheidemittel in der Abgasableitung des Brennstoffzellenstacks dabei im direkten Anschluss an den Brennstoffzellenstack und/oder nach oder in dem Kondensator und/oder nach der eventuell vorzusehenden Turbine, die zur Nutzung einer Druckenergie des Abgases vorgesehen ist. Insbesondere ist es vorgesehen, vor den Wasserabscheidemitteln und/oder vor den weiteren Wasserabscheidemitteln einen Kompressor vorzusehen, da die Wasserabscheidung bei erhöhtem Druck vorteilhaft ist. Zudem ist solch eine Hochdruckwasserabscheidung in der Luftzirkulation des Environmental Control Systems von Flugzeugen üblich. Das abgeschiedene Wasser kann zudem zu einer Befeuchtung und Kühlung der Ladeluft verwendet werden.

Der Speicher ist bevorzugt mit Druck zu beaufschlagen, insbesondere mit einem Druck oberhalb des Umgebungsluftdrucks. Dies dient der Vermeidung einer deutlich reduzierten Siedetemperatur des Kühlwassers im Speicher bei reduziertem Umgebungsdruck, wie er beispielsweise beim Flugzeug bei Reisflugbedingungen herrscht (beispielsweise 0,3 bar).

Es ist ebenfalls von der Erfindung vorgesehen, dass der Speicher andere Wärmeübertrager von Kühl- oder Heizkreisläufen anderer Medien aufweisen kann. Der weitere Kühlkreislauf ist derart flexibel als Wärme- oder Kältesenke nutzbar, unabhängig von seiner variablen Zuschaltung zur Kühlung des Brennstoffzellenstacks.

In Ausgestaltung des erfindungsgemäßen Systems ist vorgesehen, dass die Wasserverdampfungsmittel ausgebildet sind als Behältersiedemittel und/oder Entspannungsverdampfungsmittel und/oder Verdunstungsmittel.

Behältersiedemittel sind bevorzugt ausgebildet als weiterer Wärmeübertrager und entweder Ventil und Kompressor oder Gebläse oder Kompressor oder Gebläse oder Pumpe und Ventil oder Turbine oder Düse und optional Wasserbehälter.

Entspannungsverdampfungsmittel sind bevorzugt ausgebildet als Flash-Behälter, weiterem Ventil und entweder Kompressor oder Gebläse oder Ventil oder Turbine oder Düse.

Verdunstungsmittel sind bevorzugt ausgebildet als Wasserdüse und Kühlluftstrom und Gebläse.

Die Wasserverdampfungsmittel sind erfindungsgemäß als diejenigen Vorrichtungen zu verstehen, die einen Zustand des erwärmten Kühlwassers und/oder dessen Umgebung derart verändern, dass das Kühlwasser verdampft. Dies kann über Druck- und/oder Temperaturänderungen geschehen oder über eine Luftströmung, beispielsweise durch Injektion in einen Luftstrom.

In einer Ausführungsform sind die Wasserverdampfungsmittel als Verdunstungsmittel ausgebildet und durch eine Eindüsung des Kühlwassers in einen Kühlluftstrom aus durch ein Gebläse beschleunigter Umgebungsluft realisiert. In einer weiteren Ausführungsform ist das Kühlwasser im weiteren Wärmeübertrager verdampfend, hier sind die Wasserverdampfungsmittel als Behältersiedemittel ausgebildet, genauer, je nach Sättigungsdampfdruck des Kühlwassers als Kompressor, Ventil oder Gebläse. Bevorzugt ist der weitere Wärmeübertrager in den Wasserbehälter integriert und die Wasserverdampfungsmittel (Kompressor oder Gebläse) sind wiederum als Behältersiedemittel ausgebildet und den Druck innerhalb des Wasserbehälters abhängig von der Betriebstemperatur des Brennstoffzellenstacks auf den Sättigungsdampfdruck einzustellend. In einer weiteren Ausführungsform, in der Kühlwasser im weiteren Wärmeübertrager erwärmt wird bzw. teilweise verdampft wird, sind die Wasserverdampfungsmittel in Strömungsrichtung des Kühlwassers nachfolgend an den weiteren Wärmeübertrager als Entspannungsverdampfungsmittel, insbesondere als Flash-Behälter und Kompressor/Gebläse ausgebildet, wobei das erwärmte Kühlwasser im Flash-Behälter entspannt wird, wobei ein Teil gesättigter Dampf und ein Teil gesättigtes Wasser entsteht. Der Kompressor ist einen Unterdruck im Flash-Behälter erzeugend und den darin entstandenen Wasserdampf abführend.

Weiterhin ist in einer Weiterbildung der Erfindung vorgesehen, dass der weitere Wärmeübertrager innerhalb des Wasserbehälters angeordnet ist. In diesem Fall wird der Wasserbehälter bevorzugt auf Sättigungsdampfdruck gehalten, abhängig von der Betriebstemperatur des Brennstoffzellenstacks. Das Kühlwasser ist in dieser Ausführung bevorzugt innerhalb des Wasserbehälters siedend.

In Weiterbildung der Erfindung ist es vorgesehen, dass das System eine Zuluftleitung zum Leiten einer Kühlluftströmung zum erstenWärmeübertrager aufweist, insbesondere wobei die Kühlluftströmung einen durch Ein- und Auslassklappen variablen Luftwiderstand aufweist, insbesondere wobei die Kühlluftströmung durch Betrieb eines erstes Gebläses erzeugt wird, welches Umgebungsluft beschleunigend ist.

In einem Betriebszustand des Brennstoffzellenstacks, in dem das weitere Kühlsystem nicht zur Kühlung des Brennstoffzellenstacks verwendet wird, wird eine Abwärme des Brennstoffzellenstacks in Folge des Wärmeübertrags im ersten Wärmeübertrager lediglich durch den Kühlluftstrom abgeführt. Die mögliche Wärmeabgabe an den Kühlluftstrom ist dabei abhängig von dessen Strömungsgeschwindigkeit und Temperatur und damit von den Umgebungsbedingungen, bzw., im Falle eines Flugzeuges, vom Flugzustand. Wird eine größere Strömungsgeschwindigkeit benötigt, so kann das Gebläse aktiviert werden, bzw. dessen Leistung erhöht werden.

Weiterhin ist es vorgesehen, dass der erste Wärmeübertrager mit dem weiteren Wärmeübertrager identisch ist. Eine Übertragung der ersten Wärme an die Umgebung und einer weiteren Wärme an das Kühlwasser ist somit gleichzeitig stattfindend und die notwendigen zusätzlichen Mittel des Kühlkreislaufs sind reduziert, was vorteilhaft Gewicht einspart.

In Weiterbildung des erfindungsgemäßen Systems ist es vorgesehen, dass, es eine Wasserdüse aufweist, die flüssiges Kühlwasser in die beschleunige Umgebungsluft injizierend ist.

Ein Teil der injizierten Wassertröpfchen verdampft wegen ihres großen Verhältnises von Oberfläche zu Volumen besonders effektiv im Kühlluftstrom, wodurch der andere Teil der Wassertröpfchen theoretisch bis auf Kühlgrenztemperatur abgekühlt wird. Dadurch kann der abgekühlte andere Teil des Kühlwassers zurückgeführt werden und erneut Wärme aufnehmen. Gleichzeitig erhöht das anfangs warme Kühlwasser die Lufttemperatur, wodurch diese mehr Wasser als Wasserdampf aufnehmen kann und deshalb weniger Luft pro verdampftem Wasser notwendig ist. Alternativ zu fein injizierten Wassertröpfchen können Einbauten verwendet werden, wie aus Kühltürmen bekannt, die mit Wasser benetzte Oberfläche und die Verweilzeit (Fallzeit) des Wassers erhöhen und dadurch die Verdunstung fördern.

Die weitere Aufgabe der Erfindung wird gelöst durch ein Verfahren zur Kühlung eines Brennstoffzellenstacks aufweisend die Schritte:
- Übertragen einer Abwärme aus dem Brennstoffzellenstack an ein erstes Kühlmedium;
- Zirkulieren des ersten Kühlmediums in einem ersten Brennstoffzellenkühlsystem;
- Speichern von flüssigem Kühlwasser;
- Herstellen eines thermischen Kontaktes zwischen flüssigem Kühlwasser und durch die Abwärme erwärmten, erstem Kühlmedium, wobei eine weitere Wärme des ersten Kühlmediums an das flüssige Kühlwasser übertragen wird;
- Abgeben einer ersten Wärme des ersten Kühlmediums an die Umgebung, insbesondere durch Konvektion;
- Verdampfen des erwärmten Kühlwassers;
- Abgabe des verdampften Kühlwassers an die Umgebung.

Dabei stellt die erste Wärme insbesondere die Differenz aus Abwärme und weiterer Wärme dar. Das bekannte Kühlverfahren für den Betrieb eines Brennstoffzellenstacks, welches die Zirkulation eines ersten Kühlmediums nutzt, welches die Abwärme des Brennstoffzellenstacks aufnimmt, wird vorteilhaft in das erfindungsgemäße Verfahren integriert, womit bisherige Verfahrensschritte erfindungsgemäß erweitert und verbessert werden. Eine erfindungsgemäße weitere Kühlung findet mit Hilfe von gespeichertem, flüssigen Kühlwasser statt, welches zumindest einen Teil der durch das erste Kühlmedium aufgenommenen Wärme aufnimmt, womit das erste Kühlmedium einen verringerten Wärmebetrag an die Umgebung abführen muss. Durch das Verdampfen des Kühlwassers in einem Schritt des erfindungsgemäßen Kühlverfahrens nimmt das verdampfte Kühlwasser vorteilhaft Wärme in Form von Verdampfungsenthalpie auf, wobei der Dampf und damit die aufgenommene Wärme an die Umgebung abgeführt werden.

In Ausgestaltung des erfindungsgemäßen Verfahrens ist es vorgesehen, dass mindestens ein Teil der ersten Wärme oder der weiteren Wärme an dem Brennstoffzellenstack zuzuführenden Wasserstoff abgeführt wird.

Dadurch wird ein Verdampfen oder anschließendes Erwärmen bis auf Brennstoffzellenbetriebstemperatur des Wasserstoffs mindestens teilweise genutzt wird, um die erste oder weitere Wärme zu verringern, die zur Kühlung des Brennstoffzellenstacks abgeführt werden müssen. Dadurch sinkt der notwendige Kühlbedarf. Dieser Ansatz kann einen doppelten Nutzen bieten und zur verbesserten Ressourcennutzung innerhalb des Brennstoffzellensystems beitragen.

In Weiterbildung des erfindungsgemäßen Verfahrens ist vorgesehen, dass der Brennstoffzellenstack mit Sauerstoff aus einer Sauerstoffquelle betrieben wird und der Sauerstoff innerhalb eines geschlossenen Systems rezirkuliert wird.

Die Integration einer solchen Sauerstoffquelle in Kombination mit der Rezirkulation bewirkt eine kontinuierliche Betriebseffizienz, indem die Versorgung mit Sauerstoff konstant gehalten wird, ohne auf zusätzliche externe Sauerstoffquellen angewiesen zu sein. Zudem kann der Brennstoffzellenstack vorteilhaft mit erhöhter Temperatur sowie mit erhöhter Effizienz betrieben werden. Das schafft eine geringere Abwärme des Brennstoffzellenstacks sowie eine höhere Temperatur des ersten Kühlmediums, was vorteilhaft für die Kühlfunktion des erfindungsgemäßen Verfahrens ist.

Außerdem ist in einer Ausgestaltung des erfindungsgemäßen Verfahrens vorgesehen, dass aus der Abluft des Brennstoffzellenstacks kondensiertes Produktwasser entnommen und zum gespeicherten Kühlwasser hinzugefügt wird und/oder wobei aus dem verdampften Kühlwasser flüssiges Wasser abgeschieden und dem gespeicherten Kühlwasser hinzugefügt wird.

Das jeweils abgeschiedene Wasser kann erfindungsgemäß genutzt werden, um die Zuluft zu befeuchten und/oder um die Kühlung durch Kühlwasser zu unterstützen, ohne dass die zur Kühlung notwendige Durchflussmenge an Kühlwasser von Anfang an als zusätzliches Gewicht mitgeführt werden muss, sie entsteht somit mit großem Vorteil im Betrieb des Brennstoffzellenstacks und es muss lediglich eine vergleichsweise geringe Menge an anfänglichem Kühlwasser im Wasserbehälter mitgeführt werden. Zur Abscheidung kann ein Kondensator genutzt werden.

Weiterhin ist vorgesehen, dass der Brennstoffzellenstack bei einer hohen Temperatur betrieben wird, insbesondere bei über 100°C, bevorzugt 130°C.

Ein Betrieb bei höherer Temperatur kann die Effizienz des Brennstoffzellenstacks steigern. Zudem erleichtert es die Kühlung durch Verringerung des technischen Aufwands und Energiebedürfnisses der Wasserverdampfungsmittel. Das Kühlwasser kann bei Umgebungsdruck oder lediglich geringem Unterdruck, zu dessen Erzeugung ein Gebläse ausreichend ist, erzeugt werden, womit vorteilhaft kein energetisch aufwendiges Betreiben eines Kompressors notwendig ist oder auf ein Gebläse verzichtet werden kann.

In Ausgestaltung des erfindungsgemäßen Verfahrens ist es außerdem noch vorgesehen, dass das flüssige Kühlwasser zur Kühlung eines oder mehrerer zusätzlicher Kühlkreisläufe genutzt wird und/oder wobei das erwärmte oder verdampfte Kühlwasser zur Erwärmung zusätzlicher Heizkreisläufe genutzt wird.

Die letzte Aufgabe der Erfindung wird durch ein Flugzeug aufweisend ein System nach einem der Ansprüche 1 bis 10 gelöst.

Auf diese Weise ist ein Flugzeug aufweisend einen Brennstoffzellenstack zur Energieerzeugung, insbesondere einen auf einem Brennstoffzellenstack basierenden Antrieb, verbessert betreibbar. Es kann insbesondere darauf verzichtet werden Batterien zu berücksichtigen, die die Antriebsleistung im Fall erschwerter Kühlung, z.B. bei erhöhter Umgebungstemperatur, bei erhöhtem Leistungsbedarf oder bei verringerter Anströmgeschwindigkeit, d.h. insbesondere beim Start, zu einem Teil oder fast vollständig bereitstellen, oder solche Batterien können kleiner dimensioniert werden. Dadurch kann das Gewicht solcher Batterien gespart werden. Gleichzeitig wird eine Überdimensionierung der Luftkühlung vermieden. Vor dem Start kann der Wasserbehälter des weiteren Kühlsystems soweit wie bei gegebenen Umgebungsbedingungen nötig und unter Berücksichtigung von Sicherheitsfaktoren sinnvoll mit Kühlwasser gefüllt werden. Falls davon ausgegangen werden kann, dass weniger oder kein Kühlwasser notwendig ist, oder das Kühlwasser zu einem späteren Zeitpunkt aus dem Produktwasser gewonnen werden kann, kann auf das Mitführen von Kühlwasser vorrübergehend verzichtet werden, was vorrübergehend Gewicht sparen kann. Das erfindungsgemäße Flugzeug nutzt vorteilhaft im Betrieb des Brennstoffzellenstacks ohnehin entstehendes Produktwasser zur Kühlung, insbesondere um mögliche Leistungsspitzen beim Durchstarten abfedern zu können.

Die Erfindung wird im Folgenden unter Bezugnahme auf eine Zeichnung näher beschrieben. Weitere vorteilhafte Einzelheiten sind dabei den Figuren der Zeichnung zu entnehmen. Dabei zeigen:
Fig. 1 - Fig. 6b Schaltpläne verschiedener Ausführungsformen des erfindungsgemäßen Systems.
Fig. 7 und Fig. 8 Ausführungsformen einer Kathodenluftversorgung eines in einem erfindungsgemäßen System verwendeten Brennstoffzellenstacks.

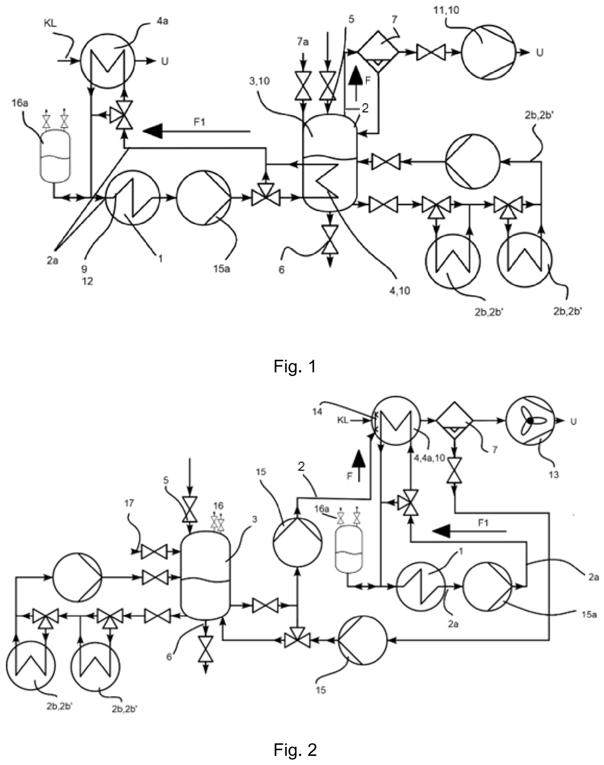

Fig. 1 zeigt einen Schaltplan einer Ausführungsform eines erfindungsgemäßen Systems. Ein Brennstoffzellenstack 1, wie im erfindungsgemäßen System enthalten, besteht aus mehreren einzelnen Brennstoffzellen, die elektrisch in Reihe geschaltet sind, um die gewünschte Gesamtspannung zu erzeugen. Jede einzelne Zelle besteht aus zwei Elektroden: einer Anode und einer Kathode, die durch eine spezielle Membran (Protonenaustauschmembran, PEM) voneinander getrennt sind. Zur Versorgung der Zellen mit den notwendigen Reaktionsgasen (Wasserstoff und Sauerstoff bzw. Luft) sowie zur Ableitung der Reaktionsprodukte (hauptsächlich Wasser) verfügt der Brennstoffzellenstack 1 über ein integriertes Leitungssystem, das sogenannte Manifold. Dieses Manifold beinhaltet eine Anodenseite 1b mit einem Einlass für Wasserstoff und einem Auslass für nicht umgesetzten Wasserstoff sowie Reaktionsnebenprodukte und eine Kathodenseite 1a mit einem Einlass für Sauerstoff (bzw. Luft) und einem Auslass für das entstandene Wasser und verbrauchte Luft. Dieses System stellt sicher, dass alle Zellen gleichmäßig versorgt und effizient betrieben werden können.

Der Brennstofzellenstack 1 wird über ein erstes Brennstoffzellenkühlsystem 2a gekühlt. In diesem wird ein erstes Kühlmedium K1 in einer ersten Förderrichtung F1 zirkuliert, insbesondere mit Hilfe einer ersten Förderpumpe 15a. Das erstes Kühlmedium K1 wird in Kühlkanälen 9 geführt und nimmt eine Abwärme des Brennstoffzellenstacks 1 auf, wodurch dieser gekühlt wird. Das erste Kühlmedium K1 wird zu einem ersten Wärmeübertrager 4a gefördert, in welchem es eine erste Wärme W1 an einen Kühlluftstromstrom KL, welcher aus insbesondere beschleunigter Umgebungsluft besteht und durch eine Zuluftleitung 12 in den ersten Wärmeübertrager 4a geführt ist, abgibt. Dadurch wird die erste Wärme W1 an eine Umgebung U abgegeben und aus dem System abgeführt. Der Druck im ersten Brennstoffzellenkühlsystem 2a wird in bekannter Weise über Druckregulierungsmittel 16a reguliert. Erfindungsgemäß weist das dargestellte System ein weiteres Kühlsystem 2 auf, in welchem Kühlwasser K in einer weiteren Förderrichtung F gefördert wird. Dieser ist separat vom erstem Brennstoffzellenkühlsystem 2a aufgebaut und es findet lediglich ein Energieaustausch in Form eines Wärmeaustauschs in einem weiteren Wärmeübertrager 4 zwischen den beiden Kühlsystemen 2, 2a statt. Das weitere Kühlsystem 2 weist ein Wasserbehälter 3 auf, in dem flüssiges Kühlwasser K gespeichert ist. Es ist insbesondere vorgesehen, dass dieser bereits zu Betriebsbeginn des Brennstoffzellenstacks 1 mit flüssigem Kühlwasser K gefüllt ist. Auf diese Weise kann das System sofort beim Start zusätzliche Kühlkapazität zur Verfügung stellen.. Das weitere Kühlsystem 2 kann das erste Brennstoffzellenkühlsystems 2a unterstützen, womit eine Redundanz bezüglich der Wärmeabgabe an die Umgebung U beziehungsweise eine Möglichkeit zur partiellen Erhöhung der Kühlkapazität durch die Nutzung beider Systeme gegeben ist. In diesem Fall nimmt das weitere Kühlsystem 2 Wärme aus dem ersten Brennstoffzellenkühlsystem 2a durch Übertragung einer weiteren Wärme W im weiteren Wärmeübertrager 4 auf. Dadurch ist die durch das erste Kühlmedium K1 an den Kühlluftstrom KL abzugebende erste Wärme W1 reduziert und die Anforderungen an den Kühlluftstrom KL (Durchfluss) sind vorteilhaft reduziert, wobei gleichzeitig die Kühlkapazität des Gesamtsystems erhöht ist. In der dargestellten Ausführungsform ist der weitere Wärmeübertrager 4 innerhalb des Wasserbehälters 3 angeordnet. Die weitere Wärme W wird damit direkt an das gespeicherte Kühlwasser K abgegeben. Erfindungsgemäß ist das Kühlwasser K innerhalb des weiteren Kühlsystems 2 verdampfend, um so Wärme in Form einer Verdampfungsenthalpie aufzunehmen, wobei der entstandene Wasserdampf bevorzugt aus dem System abgeführt wird. In der gezeigten Ausführungsform ist das Kühlwasser K direkt im Wasserbehälter 3 verdampfend. Die Wasserverdampfungsmittel 10 sind als Kombination von Wasserbehälter 3, weiterem Wärmeübertrager 4 und eventuellem Kompressor 11, der je nach Sättigungsdampfdruck des Kühlwassers K zur Unterdruckerzeugung im Wasserbehälter 3 benötigt wird, ausgebildet. Dafür ist der Wasserbehälter 3 auf Sättigungsdampfdruck gehalten, abhängig von der Temperatur des zugeführten ersten Kühlmediums K1 und damit von der Betriebstemperatur des Brennstoffzellenstacks 1. Bei einer bevorzugt höheren Betriebstemperatur ist auch die Temperatur des ersten Kühlmediums K1 erhöht. Das Kühlwasser K ist in der gezeigten Ausführungsform vorzugsweise im Wasserbehälter 3 siedend, sodass bereits im Wasserbehälter 3 die Verdampfungsenthalpie des Kühlwassers K durch das weitere Kühlsystem 2 aufgenommen und in Form von Wasserdampf an die Umgebung U abgeführt werden kann. Der Wasserbehälter 3 weist einen Einlass 5 und einen Auslass 6 auf, durch den Kühlwasser K ins Reservoir eingebracht werden kann, insbesondere vor Betrieb des Brennstoffzellenstacks 1. Eine Wasserabscheidung im weiteren Kühlsystem 2 findet in der gezeigten Ausführungsform über Wasserabscheidemittel 7, die Spritzwasserverluste verringern können und die vor dem Kompressor 11 angeordnet sind, statt. Das abgeschiedene Kühlwasser K wird über eine entsprechende Zuleitung zurück in den Wasserbehälter 3 geführt. Der Wasserbehälter 3 weist eine weitere Zuleitung auf, über die ein Zuführen von in weiteren Wasserabscheidemitteln 7a abgeschiedenem Produktwasser des Brennstoffzellenstacks 1 möglich ist. Auf diese Weise kann im Betrieb des Brennstoffzellenstacks 1 ohnehin entstehendes Wasser genutzt werden, um im weiteren Kühlsystem 2 als Kühlwasser K zu dienen. Der Druck im Wasserbehälter 3 wird über ein verbundenes Gebläse (bei Sättigungsdampfdruck von etwa Umgebungsdruck) oder, wie dargestellt, über einen Kompressor 11 eingestellt. Die dargestellte Ausführungsform entspricht einem Betrieb des Wasserbehälters bei 80°C Siedetemperatur, weshalb im Wasserbehälter 3 ein Unterdruck durch den Kompressor 11 erzeugt werden muss. Bei höheren Kühlwassertemperaturen im Wasserbehälter 3, beispielsweise 100°C, ist ein Gebläse ausreichend, um den Sättigungsdampfdruck zu erreichen und das verdampfte Kühlwasser K abzuführen, ein Verdampfen bei Unterdruck ist nicht mehr notwendig. Bei höheren Temperaturen, beispielsweise 110 °C, kann der Überdruck des verdampften Kühlwassers K zur Schuberzeugung genutzt werden. Über die Zuleitung mit rekuperiertem Produktwasser kann der Druck im weiteren Kühlsystem 2 bis auf Brennstoffzellenbetriebsdruck angehoben werden, falls der Druck im Flug (bei Nutzung des Systems in einem Flugzeug) über Umgebungsdruck angehoben werden sollte, um einen Druck in eventuellen zusätzlichen Kühl- oder Heizkreisläufen 2b, 2b' anzuheben. Die Zuleitungen zu diesen optionalen Kreisläufen 2b, 2b' ist über Ventile regulierbar. Die jeweiligen Heiz- und/oder Kühlkreisläufe 2b, 2b' sind in allen hier dargestellten Ausführungsformen jeweils optional vorhanden. Weitere, nicht dargestellte Ventile z.B., in Verbindung zu einem hier nicht dargestellten Stickstofftank, können notwendig sein, sollte der Druck im Flug über Umgebungsdruck angehoben werden.

In der Fig. 2 ist eine weitere Ausführungsform des erfindungsgemäßen Systems dargestellt. Dabei unterscheidet sich das dargestellte System lediglich im weiteren Kühlsystem 2 von dem in der Fig. 1 dargestellten. Das erste Brennstoffzellenkühlsystem 2a ist äquivalent zu dem in der Fig. 1 dargestellten. Das weitere Kühlsystem 2 weist wiederum ein Wasserbehälter 3 zur Speicherung des flüssigen Kühlwassers 3 auf, wobei der Wasserbehälter 3 einen Einlass 5 und einen Auslass 6 für das separate Zufüllen und Ablassen von flüssigem Kühlwasser K aufweist. Es weist, wie die vorher beschrieben Ausführungsform, eine Zuleitung für flüssiges Kühlwasser K auf, welches in Wasserabscheidemitteln 7 des weiteren Kühlsystems 2 abgeschieden wurde. Es weist eine weitere Zuleitung für Produktwasser 17 des Brennstoffzellenstacks 1 auf, welches in entsprechenden weiteren Abscheidemitteln 7a abgeschieden wurde. Der erste Wärmeübertrager 4a des ersten Brennstoffzellenkühlsystems 2a ist in der dargestellten Ausführungsform kombiniert mit dem weiteren Wärmeübertrager 4. Der erste Wärmeübertrager 4a ist hier ausgebildet als Stauluftwärmeübertrager. Kühlwasser K wird in diesem über eine Wasserdüse 14 feinperlig injiziert. Damit sind Wasserverdampfungsmittel 10 als Wasserdüse 14, erster bzw. weiterer Wärmeübertrager 4a, 4 und Zuluftleitung 12 ausgebildet. Das Kühlwasser K nimmt die weitere Wärme W des ersten Kühlmediums K1 auf, indem es auf die heiße Oberfläche des ersten Wärmeübertragers 4a trifft, sich erwärmt und daraufhin im Kühlluftstrom KL verdunstet. Das wird durch den niedrigen Paritaldruck des Wassers in der Kühlluft erleichtert. Der Kühlluftstrom KL wird bei Stillstand oder geringer Bewegung der Umgebungsluft, z.B. beim Start eines Flugzeuges, bevorzugt über ein Gebläse 13 erzeugt. Der Druck im Wasserbehälter 3 kann in der gezeigten Ausführungsform über weitere Druckregulierungsmittel 16 reguliert, wobei das Kühlwasser in dieser Ausführungsform nicht im Wasserbehälter 3 siedend ist, sondern in flüssiger Form mittels einer weiteren Pumpe 15 zur Wasserdüse 14 gepumpt wird. Im ersten bzw. weiteren Wärmeübertrager 4a, 4 nicht verdunstetes Wasser kann in Wasserabscheidemittel 7 abgeschieden und zurückgeführt werden.

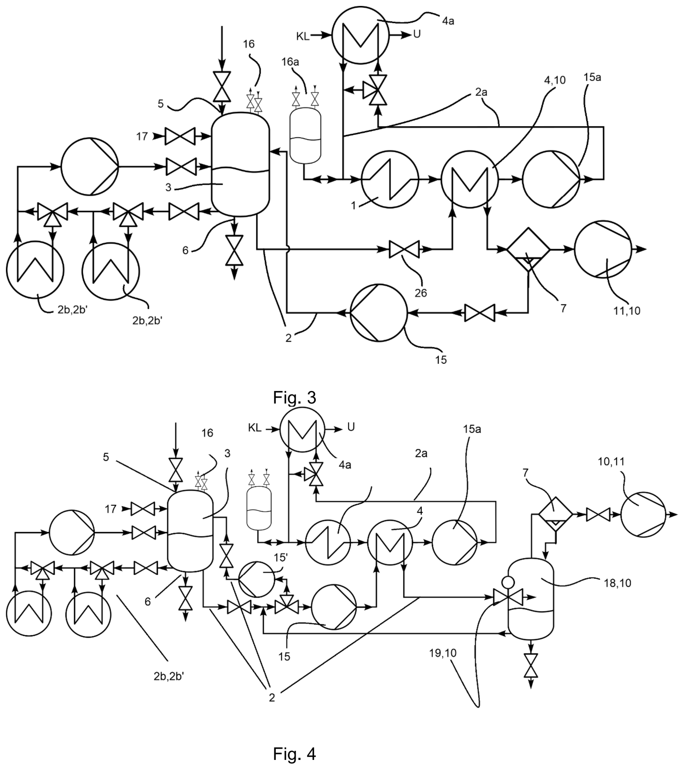

In der Fig. 3 ist eine weitere Ausführungsform der Erfindung dargestellt. Diese weist erfindungsgemäß wieder ein erstes Brennstoffzellenkühlsystem 2a und ein weiteres Kühlsystem 2 auf. Neben dem ersten Wärmeübertrager 4a, der eine erste Wärme W1 an einen Kühlluftstrom KL abgebend ist, ist ein weiterer Wärmeübertrager 4 separat dazu angeordnet. Im weiteren Wärmeübertrager 4 wird das Kühlwasser K durch das durch die Abwärme des Brennstoffzellenstacks 1 erwärmte erste Kühlmedium K1 erwärmt und verdampft. Dargestellt ist ein Verdampfen bei 80 °C und entsprechend bei Unterdruck (also unter Normaldruck), welcher durch ein Ventil und einen Kompressor 11 einstellbar ist. Bei Temperaturen größer gleich 100°C kann das Kühlwasser K bei Normaldruck verdampft werden. Bereits bei 100°C kann daher der Kompressor 11 leistungseinsparend durch ein Gebläse ersetzt werden. Bei beispielsweise 110°C kann der Überdruck des verdampften Kühlwassers K zur Verrichtung von Arbeit in einer Turbine genutzt werden bzw. zur Erzeugung von Schub. In der gezeigten Ausführung wird flüssiges Kühlwasser K insbesondere vor dem Kompressor 11 abgeschieden und in das Wasserbehälter 3 zurückgeführt. Wasserverdampfungsmittel 10 sind hier als Ventil 26, welches den Druck vor dem weiteren Wärmeübertrager senkt, weiterer Wärmeübertrager 4 und Kompressor 11 ausgebildet.

Die Fig.4 zeigt eine weitere Ausführungsform des erfindungsgemäßen Systems. In dieser Ausführungsform sind die Wasserverdampfungsmittel 10 als Entspannungsverdampfungsmittel, genauer als eine Kombination aus einem Flash-Behälter 18, einem weiteren Ventil 19 und einem Kompressor 11 ausgebildet. Das Kühlwasser K, welches im Wasserbehälter 3 gelagert ist und im weiteren Kühlsystem 2 gefördert wird, wird aus dem Wasserbehälter 3 zum weiteren Wärmeübertrager 4 gepumpt, wo es eine weitere Wärme des im ersten Brennstoffzellenkühlkreislauf 2a zirkulierenden ersten Kühlmediums K1 aufnimmt. Dabei kann das Kühlwasser K bereits teilweise im weiteren Wärmeübertrager 4 verdampfend sein. Das erwärmte Kühlwasser K wird zum weiteren Ventil 19 des Flash-Behälters 18 geleitet und in dem weiteren Ventil 19 in dem Flash-Behälter entspannt, sodass ein Teil gesättigter Kühlwasserdampf und ein Teil flüssiges Kühlwasser K entstehen. Der notwendige Unterdruck im Flash-Behälter 18 wird durch den Betrieb eines Kompressors 11 erzeugt. Durch den Unterdruck wird zudem der Wasserdampf aus dem Flash-Behälter 18 gesaugt. Ein Wasserabscheidemittel 7 ist in einer entsprechenden Saugleitung angeordnet, wodurch die Menge von durch den Kompressor 11 an die Umgebung abgegebenen Wasser verringert wird, indem Spritzwasserverluste verringert werden. Das abgeschiedene Kühlwasser K wird in den Flash-Behälter 18 zurückgeführt und aus diesem geleitet. Anschließend wird das flüssige Kühlwasser K über die weitere Pumpe 15 wieder in den weiteren Wärmeübertrager 4 gepumpt oder über eine zusätzliche Pumpe 15' dem Wasserbehälter 3 wieder zugeführt bzw. teilweise in den weiteren Wärmeübertrager 4 gepumpt und teilweise in den Wasserbehälter 3 geleitet. Dies ist insbesondere über Einlasstemperaturen der Pumpe 15 und der zusätzlichen Pumpe 15' geregelt. Die Einlasstemperaturen lassen sich durch Ventilstellungen einstellen und durch einen hier nicht dargestellten Rücklaufkühler/Zulauf-Vorwärmer verringern, wodurch, bei erhöhter Masse, das Kavitationsrisiko sinkt. Der Flash-Behälter 18 kann zum Entleeren ein Ablassventil besitzen. Alternativ können der Wasserbehälter 3 und der Flash-Behälter 18 identisch sein und/oder auf die zusätzliche Pumpe 15' kann verzichtet werden.

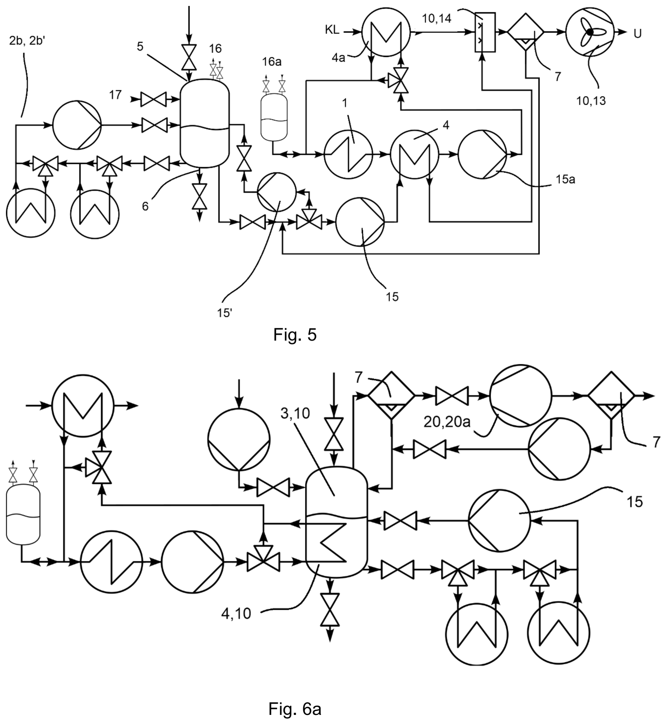

In der Fig. 5 ist eine weitere Ausführungsform des erfindungsgemäßen Systems dargestellt. Zur Verdunstung des im weiteren Wärmeübertrager 4 erwärmten Kühlwassers K nutzt diese Ausführungsform das sogenannte Kühlturmprinzip aus. Eine weitere Pumpe 15 ist das Kühlwasser K innerhalb des weiteren Kühlsystems 2 in den weiteren Wärmeübertrager 4 fördernd. Das erwärmte Kühlwasser K wird zu einer Wasserdüse 14 geleitet, die das Kühlwasser K entgegen der Fließrichtung eines Kühlluftstromes KL injizierend ist, der, zumindest in der gezeigten Ausführungsform, bereits in einem ersten Wärmeübertrager 4a eine erste Wärme W1 des ersten Kühlmediums K1 aufgenommen hat. Gemäß einer nicht dargestellten Ausführungsform ist es auch möglich, einen separaten, also nicht zuvor im ersten Wärmeübertrager 4a erwärmten Kühlluftstrom KL zu nutzen um das Kühlwasser K in diesen zu injizieren. Gemäß einer anderen Ausführungsform wird das Kühlwasser im Kreuzstrom zum Kühlluftstrom KL oder in Fließrichtung des Kühlluftstroms KL injiziert. Dadurch, dass das erwärmte Kühlwasser K die Kühlluft KL erwärmt ist die Luft ungesättigt und es kann ein Teil des Kühlwassers K verdunsten. Das nach der Injektion ebenfalls noch vorhandene flüssige Kühlwasser K kühlt durch die teilweise Verdunstung ab und wird in Wasserabscheidemitteln 7 abgeschieden und zurückgeführt, wobei es entweder wieder in den weiteren Wärmeübertrager 4 gepumpt wird oder über eine zusätzliche Pumpe 15' in den Wasserbehälter 3 geführt wird, wobei eine Einlasstemperatur der Pumpen 15,15' wie in der Ausführungsform gemäß Figur 4 reguliert sein kann. Der gesättigte Kühlluftstrom KL wird an eine Umgebung U abgeführt, wozu, wie dargestellt, Konvektion durch ein Gebläse 13 genutzt werden kann. In einer anderen Ausführungsform kann ein Abführen auch über natürlichen Zug geschehen, der durch eine geringere Dichte von Wasserdampf gegenüber trockener Luft und durch eine Erwärmung im Gravitationsfeld entstehen kann. Alternativ zu fein injizierten Wassertröpfchen können Einbauten verwendet werden, wie aus Kühltürmen bekannt, die mit Wasser benetzte Oberfläche und die Verweilzeit (Fallzeit) des Wassers erhöhen und dadurch die Verdunstung fördern. Alternativ kann der Wasserbehälter 3 in den Kühlturm bestehend aus Wasserdüse 14, Wasserabscheidemitteln 7 und optional Einbauten integriert sein und/oder auf die zusätzliche Pumpe 15' kann verzichtet werden.

Die in der Fig. 6a dargestellte Ausführungsform des erfindungsgemäßen Systems entspricht der in der Fig. 1 dargestellten Ausführungsform, in der Wasserverdampfungsmittel 10 als Kombination des Wasserbehälters 3, des innerhalb des Wasserbehälters 3 angeordneten weiteren Wärmeübertragers 4 und eventuell eines den Druck im Wasserbehälter 3 auf Sättigungsdampfdruck regulierenden Mittels, welches gemäß Fig. 1 als Kompressor 11 ausgebildet ist und in der Ausführungsform gemäß Fig. 6a als Düse 20a oder Turbine 20 ausgebildet ist. Die dargestellte Ausführungsform entspricht dem Betrieb des Wasserbehälters 3 im Überdruck, also bei einer Temperatur oberhalb von 100 °C. Damit ist die Düse 20a oder Turbine 20 nicht zur Wasserverdampfung notwendig, das jeweilige Element dient zur Nutzung der Druckenergie des verdampften Wassers zur Schuberzeugung bzw. zur Verrichtung mechanischer Arbeit.

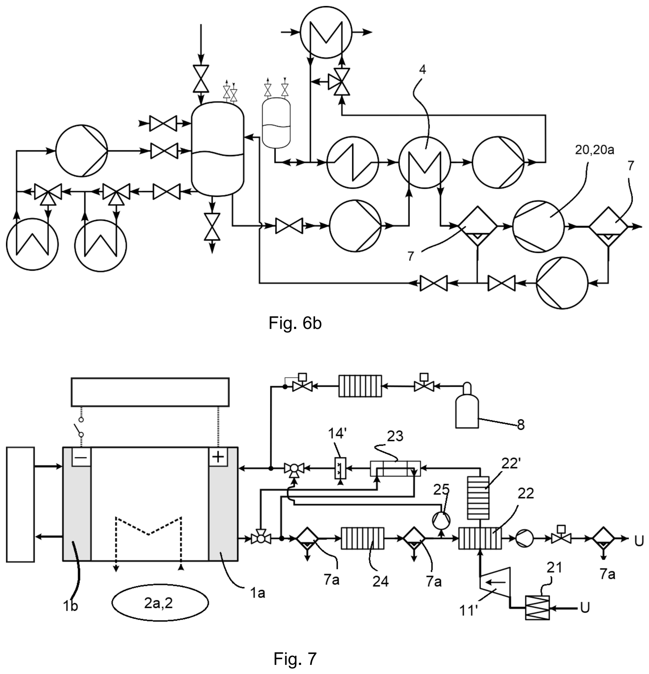

Die in der Fig. 6b dargestellte, weitere Ausführungsform des erfindungsgemäßen Systems entspricht der in der Fig. 3 dargestellten Ausführungsform, allerdings ist der Kompressor zur Erzeugung eines Unterdrucks im weiteren Wärmeübertrager ersetzt durch eine Düse 20a oder eine Turbine 20 und das Ventil 26 ersetzt durch eine Pumpe. Ein weiteres Ventil kann als Absperrventil genutzt werden. Das entspricht der Situation, wie bereits in der Fig. 6a beschrieben, in der das Kühlwasser K im Überdruck verdampfend ist, also bei einer Temperatur oberhalb 100°C, was bei einer entsprechend hohen Brennstoffzellstacktemperatur der Fall ist. Die dargestellte Ausführungsform zeigt zudem zusätzliche Wasserabscheidemittel 7, welche hinter der Düse 20 bzw. hinter der Turbine 20a angeordnet sind. Durch den Schub bzw. die geleistete Arbeit des Dampfes entsteht eine Druckverringerung, infolgedessen flüssiges Kühlwasser K auskondensieren kann, welches durch die Wasserabscheidemittel 7 abgeschieden und wieder im weiteren Kühlsystem 2 genutzt werden kann, womit weniger Kühlwasser K das weitere Kühlsystem 2 verlässt und ersetzt werden muss.

In der Fig. 7 ist eine Kathodenluftversorgung eines Brennstoffzellenstacks 1 gezeigt, der über ein erfindungsgemäßes System zur Kühlung des Brennstoffzellenstacks 1 verfügt. Der generelle Aufbau des Brennstoffzellenstacks 1 entspricht dem in der Fig. 1 beschriebenen Aufbau. Demnach ist der dargestellte Brennstoffzellenstack 1 über ein erstes Brennstoffzellenkühlsystem 2a sowie über ein weiteres Kühlsystem 2 gekühlt, wobei die genaue Ausführungsform der Kühlsysteme 2, 2a erfindungsgemäß zu wählen ist und hier nicht weiter beschränkt ist. Der Brennstoffzellenstack 1 weist eine Anodenseite 1b und eine Kathodenseite 1a auf. Die Anodenseite 1b weist einen Einlass für Wasserstoff und einen Auslass für nicht umgesetzten Wasserstoff sowie Reaktionsnebenprodukte auf. Die Kathodenseite 1a weist einen Einlass für Sauerstoff bzw. Luft und einen Auslass für entstandenes Produktwasser und verbrauchte Luft auf. Die Kathodenseite 1a kann entsprechende über aus einer Umgebung U entnommene Luft versorgt werden oder über eine separate Sauerstoffquelle 8, die die Kathodenseite 1a mit reinem Sauerstoff versorgend ist. Wird Luft aus der Umgebung U als Zuluft zur Versorgung der Kathodenseite 1a verwendet, so wird sie zuvor in einem Filter 21 von Partikeln gereinigt, was den Brennstoffzellenstack 1 schützt. In einem weiteren Kompressor 11' findet eine Druckerhöhung der Zuluft auf einen Betriebsdruck des Brennstoffzellenstacks 1 statt, zumindest, falls der Betriebsdruck, wie üblich, oberhalb eines Umgebungsdrucks liegt. Dies ist insbesondere relevant, bei niedrigen Umgebungsdrücken, beispielsweise bei Verwendung des Brennstoffzellenstacks 1 in einem Flugzeug. Nach der Druckerhöhung ist eine Kühlung der Zuluft vorgesehen. Diese kann über einen Kühler 22 gegen eine kalte Abluft des Brennstoffzellenstacks 1 erfolgen und/oder über einen Ladluftkühler 22' und/oder über Verwendung einer weiteren Wasserdüse 14', die Wassertropfen in die Zuluft eindüsend ist, welche in der Zuluft verdunsten und diese dadurch kühlen. Eine weitere Wasserdüse 14' ist zudem vorteilhaft, da sie die relative Feuchtigkeit der Zuluft anhebend ist. Eine ausreichende Feuchte der in die Kathode 1a geführten Zuluft ist bekannterweise notwendig, um ein Austrockenen von Membranen des Brennstoffzellenstacks 1 zu verhindern. Möglich ist auch die Nutzung eines separaten Befeuchters 23, statt der weiteren Wasserdüse 14' oder als Ergänzung, welcher allerdings einen zusätzlichen Masseeintrag bedeutet, weshalb die Verwendung lediglich der weiteren Wasserdüse 14' bevorzugt ist. Ein an die Anode 1b angeschlossenes Anodensystem, welches die Versorgung der Anode 1b mit Wasserstoff beinhaltet, ist nicht genauer dargestellt und dem Fachmann bekannt. Die Abwärme des Brennstoffzellenstacks 1 wird erfindungsgemäß über ein Brennstoffzellenkühlsystem 2a sowie ein weiteres Kühlsystem 2 abgeführt. Im Betrieb des Brennstoffzellenstacks 1 wird eine Abluft an der Kathode 1a abgeführt. Dabei kann die Abluft durch den etwaigen Befeuchter 23 geführt werden und/oder durch einen Kondensator 24 und/oder durch den die Zuluft kühlenden Kühler 22 oder auch durch keine der genannten Bauteile. Bevorzugt wird ein Kondensator 24 im Strom der Abluft eingesetzt, um eine Wasserabscheidung aus der Abluft zu verbessern. Da die Abluft infolge der im Brennstoffzellenstack 1 erfolgten Oxidation von Wasserstoff eine große Menge Wasser enthält und die Abluft aufgrund des begrenzten Sättigungsdampfdrucks von Wasser bereits flüssiges Wasser enthalten kann, wird Wasser in weiteren Wasserabscheidemitteln 7a bereits vor dem Kondensator 24 abgeschieden. Im bzw. nach dem Kondensator 24 kann über zusätzliche weitere Wasserabscheidemittel 7a ein Großteil des in der Abluft enthaltenen Wassers abgeschieden werden. Im etwaigen Kühler 22 wird die Abluft durch die Zuluft erwärmt und der Druck der Abluft wird anschließend in einer Turbine oder einem Ventil gegenüber der Umgebung U abgebaut. Vor einem Austritt in die Umgebung können noch einmal weitere Wasserabscheidemittel 7a vorgesehen sein. Das in den weiteren Wasserabscheidemitteln 7a oder das in einem Teil der weiteren Wasserabscheidemittel 7a abgeschiedene Wasser (Produktwasser 17) kann zur Befeuchtung der Zuluft in der weiteren Wasserdüse 14' genutzt werden. In diesem Fall werden an das Wasser das zur Befeuchtung der Zuluft in der weiteren Wasserdüse 14' genutzt wird erhöhte Anforderungen gestellt, um eine Degradation der Brennstoffzelle sowie den elektrischen Kurzschluss der Zellen zu vermeiden, da das Wasser dem Brennstoffzellenstack 1 zugeführt wird. Es ist zudem angedacht, das abgeschiedene Wasser in den Wasserbehälter 3 des weiteren Kühlsystems 2 einzuleiten. Dies ist beispielsweise in jeder der in den Fig. 1 - 6 b dargestellten Ausführungsformen durch das Bezugszeichen 17 bzw. 7a an einer Zuleitung des Wasserbehälters 3 angedeutet. Die Sauerstoffquelle 8 kann vorübergehend genutzt werden, um die Kathode 1a teilweise oder vollständig mit Sauerstoff zu versorgen. Bei Betrieb mit reinem Sauerstoff kann die Temperatur des Brennstoffzellenstacks 1 vorteilhaft erhöht werden. Zudem ist der Wirkungsgrad gesteigert. Dadurch muss weniger Abwärme bei erhöhter Temperatur abgeführt werden, was einen zweifach positiven Effekt auf das erfindungsgemäße System hat. Ein Rezirkulationsgebläse 25 kann im Betrieb mit Sauerstoff aus der Sauerstoffquelle 8 vorteilhaft sein, um das Abgas des Brennstoffzellenstacks 1 zu rezirkulieren und so die Sauerstoffausnutzung zu verbessern. Bei Ausschließlichem Betrieb mit Sauerstoff aus der Sauerstoffquelle 8 ist bei einer vollständigen Rezirkulation in der Abluft des Brennstoffzellenstacks 1 lediglich Wasser enthalten. Der in der Sauerstoffquelle 8 flüssig gelagerte Sauerstoff kann für zusätzliche Kühlzwecke genutzt werden. Dadurch wird der Sauerstoff vorgeheizt vor Zuführung zur Kathode 1a, was dessen Effizienz steigert.

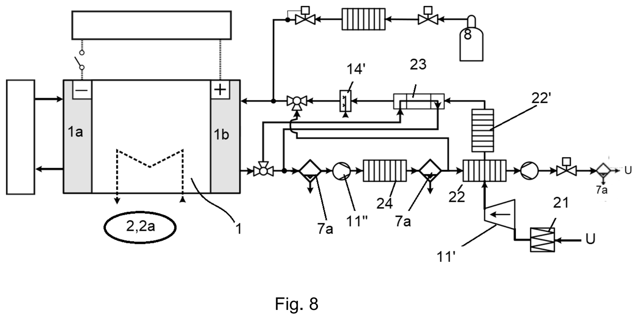

In der Fig. 8 ist eine weitere Ausführungsform einer Kathodenluftversorgung eines Brennstoffzellenstacks 1 gezeigt, wobei diese sich lediglich über das fehlende Rezikulationsgebläse 25 und den vor dem Kondensator 24 angeordneten Verdichter 11" von der Ausführungsform der Fig. 1 unterscheidet. Die Druckerhörung der Abluft durch den Verdichter 11" ist vorteilhaft für die Wasserabscheidung in den weiteren Wasserabscheidemitteln 7a.

### BEZUGSZEICHENLISTE

- 1: Brennstoffzellenstack
- 1a: Kathodenseite
- 1b: Anodenseite
- 2: weiteres Kühlsystem
- 2a: erstes Brennstoffzellenkühlsystem
- 2b: zusätzlicher Kühlkreislauf
- 2b': zusätzlicher Heizkreislauf
- 3: Wasserbehälter
- 4: weiterer Wärmeübertrager
- 4a: erster Wärmeübertrager
- 5: Einlass
- 6: Auslass
- 7: Wasserabscheidemittel
- 7a: weitere Wasserabscheidemittel
- 8: Sauerstoffquelle
- 9: Kühlkanäle
- 10: Wasserverdampfungsmittel
- 11: Kompressor
- 11': weiterer Kompressor
- 11": Verdichter
- 12: Zuluftleitung
- 13: Gebläse
- 13': weiteres Gebläse
- 14: Wasserdüse
- 14': zusätzliche Wasserdüse
- 15a: erste Pumpe
- 15: weitere Pumpe
- 15': zusätzliche Pumpe
- 16: Druckregulierungsmittel
- 16a: weitere Druckregulierungsmittel
- 17: Produktwasser
- 18: Flash-Behälter
- 19: weiteres Ventil
- 20: Düse
- 20a: Turbine
- 21: Filter
- 22: Kühler
- 22': Ladeluftkühler
- 23: Befeuchter
- 24: Kondensator
- 25: Rezirkulationsgebläse
- 26: Ventil
- K1: erstes Kühlmedium
- K: Kühlwasser
- KL: Kühlluftstrom
- U: Umgebung
- W1: erste Wärme
- W: weitere Wärme
- F1: erste Förderrichtung
- F: weitere Förderrichtung

## Patentansprüche

1. System zur Kühlung eines Brennstoffzellenstacks (1), aufweisend ein erstes Brennstoffzellenkühlsystem (2a), in welchem ein erstes Kühlmediums (K1) in Kühlkanälen (9) gefördert wird und welches einen ersten Wärmeübertrager (4a) aufweist, welcher zur Abgabe einer ersten Wärme (W1) des ersten Kühlmediums (K1) an eine Umgebung (U) eingerichtet ist, weiter aufweisend ein weiteres Kühlsystem (2), wobei das weitere Kühlsystem (2) ein Wasserbehälter (3) zur Aufnahme flüssigen Kühlwassers (K) und einen weiteren Wärmeübertrager (4) aufweist, **dadurch gekennzeichnet, dass** der weitere Wärmeübertrager (4) zur Übertragung einer weiteren Wärme (W) des ersten Kühlmediums (K1) an das Kühlwasser (K) eingerichtet ist, wobei das weitere Kühlsystem (2) Wasserverdampfungsmittel (10) aufweist, durch die das Kühlwasser (K) zumindest teilweise verdampfend ist.

2. System nach Anspruch 1, **dadurch gekennzeichnet, dass** der Brennstoffzellenstack (1) über eine geschlossene Sauerstoffquelle (8) mit Sauerstoff für den Betrieb versorgbar ist, insbesondere wobei der derart zugeführte Sauerstoff zusammen mit einem Kathodenabgas des Brennstoffzellenstacks (1) rezirkuliert wird.

3. System nach Anspruch 1, **dadurch gekennzeichnet, dass** der Wasserbehälter (3) einen Einlass (5) zum Einfüllen von flüssigem Kühlwasser (K) und/oder einen Auslass (6) zum Ablassen von flüssigem Kühlwasser (K) aufweist.

4. System nach Anspruch 1, 2 oder 3, wobei der weitere Kühlkreislauf (2) Wasserabscheidemittel (7) zur Abscheidung flüssigen Wassers aus dem verdampften Kühlwasser (K) und/oder das System weitere Wasserabscheidemittel (7a) zur Abscheidung flüssigem Wassers aus Produktwasser (17) aus dem Betrieb des Brennstoffzellenstacks (1) aufweist, insbesondere wobei die Wasserabscheidemittel (7) und/oder die weiteren Wasserabscheidemittel (7a) mit dem Wasserbehälter (3) flüssigkeitsleitend verbunden sind, insbesondere wobei in einer jeweiligen Fließrichtung vor den Wassersabscheidemitteln (7) und/oder vor den weiteren Wasserabscheidemitteln (7a) ein Kompressor (11) und ein Kondensator (24) angeordnet sind.

5. System nach einem der vorherigen Ansprüche, **dadurch gekennzeichnet, dass** die Wasserverdampfungsmittel (10) ausgebildet sind als Behältersiedemittel und/oder dass die Wasserverdampfungsmittel (10) ausgebildet sind als Entspannungsverdampfungsmittel und/oder dass die Wasserverdampfungsmittel (10) ausgebildet sind als Verdunstungsmittel.

6. System nach einem der vorigen Ansprüche, **dadurch gekennzeichnet, dass** der weitere Wärmeübertrager (4) innerhalb des Wasserbehälters (3) angeordnet ist.

7. System nach einem der vorherigen Ansprüche, **dadurch gekennzeichnet, dass** es eine Zuluftleitung (12) zum Leiten einer Kühlluftströmung (KL) zum ersten Wärmeübertrager (4a) aufweist, insbesondere wobei Ein- und Auslassklappen vorhanden sind, durch die die Kühlluftströmung (KL) einen variablen Luftwiderstand aufweist, insbesondere wobei die Kühlluftströmung (KL) durch Betrieb eines erstes Gebläses (13) erzeugt wird, welches Umgebungsluft beschleunigend ist, wobei der erste Wärmeübertrager (4a) vorzugsweise mit dem weiteren Wärmeübertrager (4) identisch ist.

8. System nach Anspruch 7, **dadurch gekennzeichnet, dass** das weitere Kühlsystem (2) eine Wasserdüse (14) aufweist, die flüssiges Kühlwasser (K) in die Kühlluftströmung (KL) injizierend ist.

9. Verfahren zur Kühlung eines Brennstoffzellenstacks (1) aufweisend die Schritte:
- Übertragen einer Abwärme aus dem Brennstoffzellenstack (1) an ein erstes Kühlmedium (K1);
- Zirkulieren des ersten Kühlmediums (K1) in einem ersten Brennstoffzellenkühlsystem (2a);
- Speichern von flüssigem Kühlwasser (K);
- Herstellen eines thermischen Kontaktes zwischen flüssigem Kühlwasser (K) und durch die Abwärme erwärmten, erstem Kühlmedium (K1), wobei eine weitere Wärme (W) des ersten Kühlmediums (K1) an das flüssige Kühlwasser (K) übertragen wird;
- Abgeben einer ersten Wärme des ersten Kühlmediums (K1) an die Umgebung, insbesondere durch Konvektion;
- Verdampfen des Kühlwassers (K) in Folge der aufgenommenen weiteren Wärme (W);
Abgabe des verdampften Kühlwassers (K) an die Umgebung (U).

10. Verfahren nach Anspruch 9, wobei mindestens ein Teil der ersten Wärme (W1) oder der weiteren Wärme (W) an den Wasserstoff abgeführt wird, bevor dieser dem Brennstoffzellenstack (1) zugeführt wird.

11. Verfahren nach Anspruch 9oder 10, wobei der Brennstoffzellenstack (1) mit Sauerstoff aus einer Sauerstoffquelle (8) betrieben wird und der Sauerstoff rezirkuliert wird.

12. Verfahren nach einem der Ansprüche 9 bis 11, wobei aus der Abluft des Brennstoffzellenstacks (1) kondensiertes Wasser entnommen und zum gespeicherten Kühlwasser (K) hinzugefügt wird und/oder wobei aus dem verdampften Kühlwasser (K) flüssiges Wasser abgeschieden und dem gespeicherten Kühlwasser (K) hinzugefügt wird.

13. Verfahren nach einem der Ansprüche 10 bis 12, wobei der Brennstoffzellenstack (1) bei einer hohen Temperatur betrieben wird, insbesondere bei über 100°C, bevorzugt 130°C.

14. Verfahren nach einem der Ansprüche 10 bis 13 wobei das flüssige Kühlwasser (K) zur Kühlung eines oder mehrerer zusätzlicher Kühlkreisläufe (2b) genutzt wird und/oder wobei das erwärmte oder verdampfte Kühlwasser (K) zur Erwärmung zusätzlicher Heizkreisläufe (2b') genutzt wird.

15. Flugzeug aufweisend ein System nach einem der Ansprüche 1 bis 8.
